**Europäisches Patentamt**

(19) **European Patent Office**

**Office européen des brevets**

(11) Numéro de publication: **0 255 517**
**B1**

(12) ## FASCICULE DE BREVET EUROPEEN

(45) Date de publication du fascicule du brevet:
**28.12.88**

(51) Int. Cl.⁴: **F 28 F 9/02,** F 16 L 37/00,
F 16 L 37/24

(21) Numéro de dépôt: **86901905.9**

(22) Date de dépôt: **20.03.86**

(86) Numéro de dépôt international:
**PCT/FR 86/00098**

(87) Numéro de publication internationale:
**WO 86/05580 (25.09.86** Gazette 86/21)

(54) **BOITE DE DISTRIBUTION POUR ECHANGEUR DE CHALEUR, AVEC RACCORD RAPIDE.**

(30) Priorité: **21.03.85 FR 8504213**

(43) Date de publication de la demande:
**10.02.88 Bulletin 88/6**

(45) Mention de la délivrance du brevet:
**28.12.88 Bulletin 88/52**

(84) Etats contractants désignés:
**DE GB IT**

(56) Documents cités:
**EP-A- 0 029 859**
**EP-A- 0 046 726**
**EP-A- 0 082 950**
**FR-A- 1 116 161**
**FR-A- 1 377 585**
**FR-A- 1 529 728**
**FR-A- 1 531 455**
**FR-A- 2 312 719**
**FR-A- 2 341 261**
**FR-A- 2 444 580**
**US-A- 1 871 421**
**US-A- 3 177 896**
**US-A- 3 211 178**
**US-A- 3 938 233**

(73) Titulaire: **VALEO, 64 Avenue de la Grande Armée,
F-75017 Paris (FR)**

(72) Inventeur: **RECHE, Christian, 3, rue des Murgers,
F-28130 Maintenon (FR)**

(74) Mandataire: **Netter, André et al, Cabinet NETTER 40, rue
Vignon, F-75009 Paris (FR)**

ACTORUM AG

## Description

### DOMAINE TECHNIQUE

L'invention concerne une boîte à fluide pour échangeur de chaleur, en particulier pour véhicule automobile, et son dispositif de raccord rapide à un circuit de fluide.

### TECHNIQUE ANTERIEURE

On sait qu'un échangeur de chaleur, destiné en particulier à équiper un véhicule automobile, comprend en général au moins une boîte à fluide munie d'une tubulure d'entrée ou de sortie de fluide qui est raccordée à étanchéité à un tuyau souple appelé «durite» relié au circuit de fluide, par exemple le circuit de liquide de refroidissement du moteur du véhicule automobile. Une autre tubulure, de sortie ou d'entrée de fluide respectivement, est prévue sur la même boîte à fluide ou sur l'autre boîte à fluide, selon le type de l'échangeur, et est raccordée à étanchéité par un autre tuyau souple au circuit de fluide.

Un échangeur de chaleur de ce genre est décrit dans FR-A-2 444 580. Pour le raccordement de cet échangeur de chaleur, chacun des tuyaux souples doit être enfilé à force, par une extrémité, sur l'extrémité de la tubulure correspondante et maintenu en place sur la tubulure au moyen d'un collier de serrage qui est monté autour de cette extrémité du tuyau souple et la serre fermement sur la tubulure.

Ces opérations de montage des tuyaux souples sur les tubulures et de pose des colliers de serrage sont relativement longues et peu commodes à effectuer sur une chaîne d'assemblage ou de montage de véhicules automobiles. Les constructeurs automobiles souhaitent actuellement disposer de moyens facilitant ces opérations et réduisant largement leur durée.

### EXPOSE DE L'INVENTION

L'invention apporte une solution simple, efficace et rapide à ce problème.

Elle propose à cet effet un échangeur de chaleur, en particulier pour véhicule automobile, comprenant un dispositif de raccord ayant deux éléments, le premier élément présentant deux passages de fluide séparés formés par deux tubulures d'entrée et de sortie de fluide respectivement, formées d'une pièce avec une boîte à fluide, caractérisé en ce que ces deux tubulures sont coaxiales sur au moins une partie de leur longueur depuis leurs extrémités libres.

A leurs extrémités de raccordement à la boîte à fluide, ces deux tubulures peuvent être coaxiales ou extérieures l'une à l'autre, selon les cas.

Cette coaxialité des tubulures de la boîte à fluide à leur extrémité libre permet de les relier aux tuyaux flexibles d'un circuit de fluide par un dispositif de raccord rapide, caractérisé en ce qu'il comprend un élément formé avec deux passages de fluide séparés l'un de l'autre et propres à être raccordés à étanchéité aux extrémités libres des tubulures coaxiales de la boîte à fluide, les deux passages de fluide de cet élément étant constitués par deux tubulures coaxiales à l'extrémité de raccordement de cet élément et par deux conduits extérieurs l'un à l'autre à l'extrémité opposée de cet élément, ces deux conduits étant propres à être reliés chacun à un tuyau flexible d'amenée ou de retour de fluide, respectivement.

Cet élément est avantageusement du type à verrouillage par encliquetage sur l'extrémité libre des tubulures coaxiales de la boîte à fluide.

Ainsi, grâce à l'invention, les opérations de raccordement d'un échangeur de chaleur à un circuit de fluide sur une chaîne d'assemblage et de montage de véhicules automobiles se limitent à une opération unique de couplage des deux éléments d'un raccord rapide, l'un de ces éléments étant formé par les tubulures coaxiales de la boîte à fluide et l'autre par l'élément relié aux tuyaux flexibles précités.

Selon une autre caractéristique de l'invention, les tubulures coaxiales de la boîte à fluide et celles dudit élément sont engagées à étanchéité les unes dans les autres et sont centrées les unes sur les autres à leurs extrémités.

Les parties de tubulures coaxiales qui sont engagées les unes dans les autres ménagent entre leurs parois cylindriques respectives des espaces annulaires de logement de joints d'étanchéité.

L'élément relié aux tuyaux flexibles comprend des moyens de verrouillage à encliquetage propres à coopérer avec des moyens conjugués prévus sur l'une des tubulures coaxiales de la boîte à fluide, ces moyens comprenant par exemple un ergot ou téton formé en saillie sur la tubulure extérieure dudit élément et propre à être engagé dans une encoche en L de l'extrémité libre de la tubulure coaxiale extérieure de la boîte à fluide.

Avantageusement, cet élément est réalisé d'une seule pièce par moulage, par exemple en matière plastique.

### DESCRIPTION SOMMAIRE DES DESSINS

Dans la description qui suit, faite à titre d'exemple, on se réfère aux dessins annexés, dans lesquels:

— la figure 1 est une vue en perspective éclatée, avec arrachement partiel, des deux éléments d'un dispositif de raccord rapide selon l'invention;

— la figure 2 représente schématiquement une vue de face, en coupe partielle, d'un échangeur de chaleur comprenant une boîte à eau selon l'invention;

— la figure 3 est une vue de dessus de cet échangeur, les deux tubulures de la boîte à eau étant représentées en coupe selon la ligne III-III de la figure 2;

— la figure 4 est une vue schématique en coupe axiale d'un dispositif de raccord rapide selon l'invention, représenté à l'état assemblé;

— la figure 5 est une vue partielle de ce dispositif;

— la figure 6 est une vue simplifiée de côté de ce dispositif.

## MEILLEURE MANIERE DE REALISER L'INVENTION

Le dispositif de raccord rapide représenté aux dessins comprend deux éléments 10 et 12 en matière plastique moulée dont l'un est raccordé à une boîte à eau d'un échangeur de chaleur et dont l'autre est destiné à être relié par deux tuyaux flexibles (non représentés) à un circuit de liquide de refroidissement d'un moteur à combustion interne de véhicule automobile.

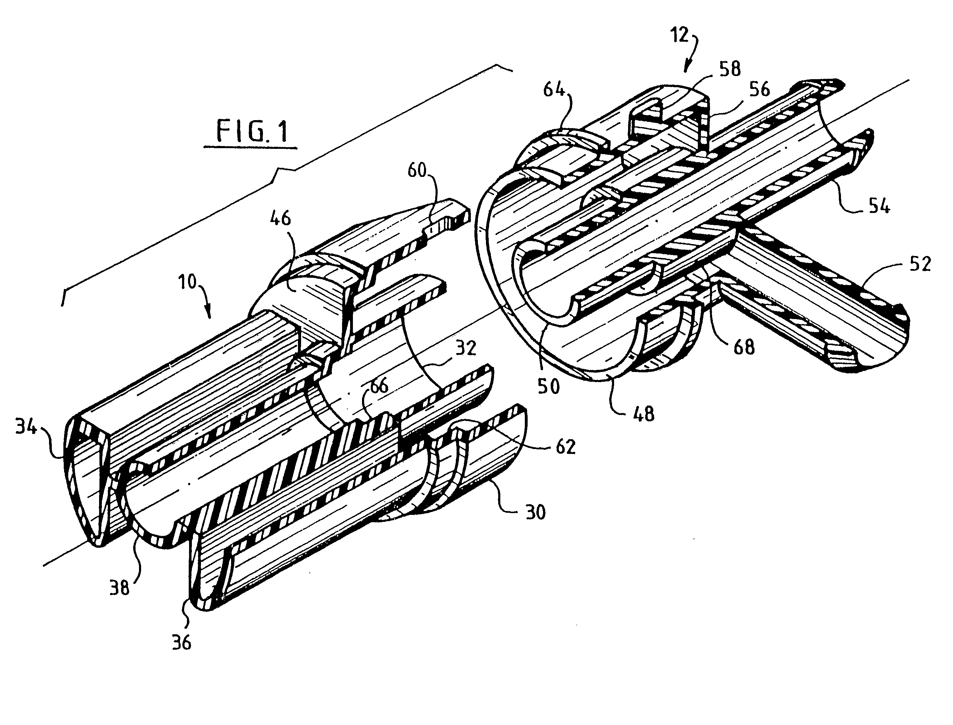

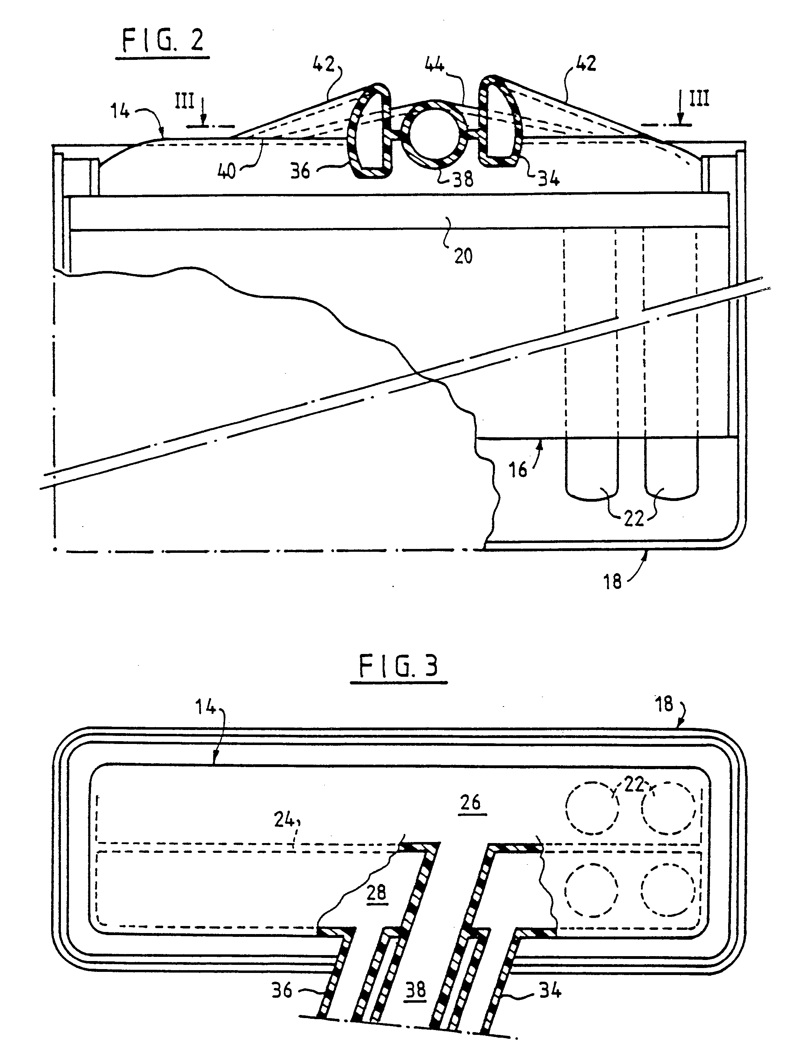

L'élément 10, dont une partie seulement est représentée en figure 1, est réalisé d'une pièce, par moulage, avec une boîte à eau 14 d'un échangeur de chaleur 16 qui est représenté monté dans un boîtier 18 en figures 2 et 3.

Cet échangeur de chaleur 16 est du type comprenant une boîte à eau 14 unique montée, de façon classique, par l'intermédiaire d'un collecteur 20 à une extrémité d'un faisceau de tubes 22 qui sont des tubes en U.

L'espace interne de la boîte à eau 14 est partagé par une cloison longitudinale 24 en deux chambres 26 et 28 séparées l'une de l'autre de façon étanche quand la boîte à eau 14 est montée sur le collecteur 20, la cloison longitudinale 24 s'étendant entre les extrémités de chacun des tubes 22, de telle sorte que les deux chambres 26 et 28 de la boîte à eau sont reliées entre elles par les tubes 22.

L'échangeur de chaleur 16 est alimenté en liquide par l'élément 10 du dispositif de raccord rapide, qui comprend deux passages séparés de liquide aboutissant aux chambres 26 et 28 respectivement de la boîte à eau 14. Ces deux passages de liquide sont formés par deux tubulures 30 et 32 qui sont cylindriques et coaxiales à l'extrémité libre de l'élément 10 et par des conduits 34, 36, 38 à l'extrémité opposée de l'élément raccordée à la boîte à eau 14, ces conduits 34, 36, 38 étant parallèles les uns aux autres et extérieurs les uns aux autres, le conduit 38 étant formé par le prolongement de la tubulure intérieure 32 et aboutissant à la chambre 26 de la boîte à eau 14, tandis que les conduits 34 et 36 débouchent dans la tubulure extérieure 30 par une extrémité et dans la chambre 28 de la boîte à eau 14 à leur autre extrémité.

Comme on le voit en figure 2, le plan médian horizontal des conduits 34, 36 et 38 est sensiblement tangent à la paroi incurvée 40 de la boîte à eau, celle-ci comprenant des parties en saillie 42 et 44 qui se raccordent en oblique aux parties supérieures des conduits 34, 36 et 38 respectivement, afin de faciliter la répartition dans les chambres 28 et 26 de la boîte à eau du liquide passant par les conduits 34, 36 et 38.

Les tubulures coaxiales 30 et 32 de l'élément 10 sont réunies entre elles par une paroi transversale 46, à une certaine distance de leur extrémité libre, cette paroi 46 s'étendant autour de la tubulure intérieure 32 jusqu'à la paroi de la tubulure extérieure 30 et étant reliée également aux conduits 34 et 36 qui débouchent dans la tubulure extérieure 30 par des orifices, venus de moulage, de cette paroi transversale 46.

L'autre élément 12 du dispositif de raccord rapide selon l'invention est également réalisé en une seule pièce par moulage, notamment en matière plastique, et comprend deux passages séparés de liquide formés, à l'extrémité de raccordement de l'élément 12, par deux tubulures coaxiales 48 et 50 et, à l'extrémité opposée de cet élément 12, par deux conduits 52 et 54 qui sont extérieurs l'un à l'autre et qui sont destinés chacun à recevoir l'extrémité d'un tuyau flexible (non représenté).

Le conduit 52 s'étend perpendiculairement à l'axe des tubulures 48 et 50 dans la tubulure extérieure 48, tandis que l'autre conduit 54 est formé par le prolongement axial de la tubulure intérieure 50.

Comme pour l'élément 10 du dispositif, les tubulures coaxiales 48 et 50 sont reliées l'une à l'autre, à distance de leurs extrémités libres, par une parois transversale 56 qui entoure la tubulure intérieure 50.

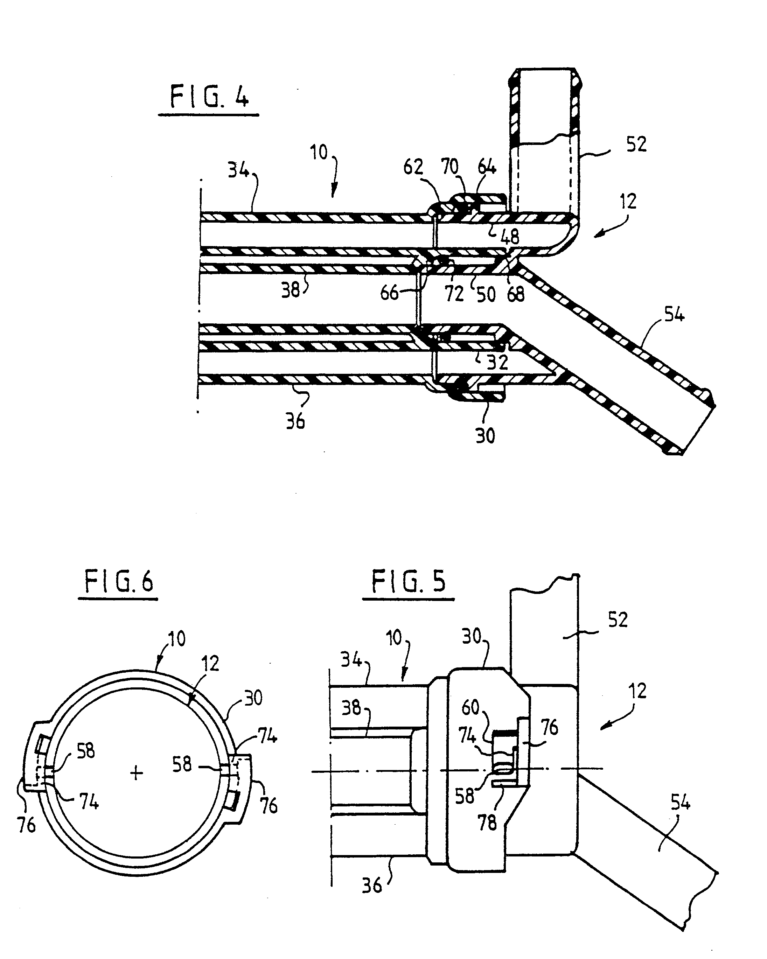

L'élément 12 comprend également un téton ou ergot 58, en saillie radiale sur la tubulure extérieure 48, et propre à venir s'engager, par encliquetage, dans une encoche 60, représentée partiellement, de l'extrémité libre de la tubulure extérieure 30 de l'élément 10. Le couplage à étanchéité des éléments 10 et 12 du dispositif va maintenant être décrit plus en détail en référence aux figures 4 à 6.

Les éléments du dispositif de raccord rapide représenté dans ces figures diffèrent de ceux du dispositif représenté en figure 1 uniquement par l'orientation des conduits 52 et 54 de l'élément 12, le conduit 52 étant perpendiculaire à l'axe commun des éléments 10 et 12, comme en figure 1, tandis que le conduit 54 s'étend en oblique par rapport à cet axe, au lieu d'être aligné sur cet axe. Les éléments du dispositif de raccord rapide et les parties qui les constituent seront donc désignés par les mêmes références dans les figures 1 et 4 à 6, respectivement.

La figure 4 représente ce dispositif à l'état assemblé. Les éléments 10 et 12 du dispositif sont couplés l'un à l'autre à étanchéité et sont verrouillés en position de couplage par encliquetage.

Les tubulures coaxiales 48 et 50 de l'élément 12 sont destinées à être engagées dans les tubulures 30 et 32 respectivement de l'élément 10. Ces tubulures sont munies de portées cylindriques, externes ou internes selon les cas, permettant le centrage des extrémités des tubulures dans lesquelles elles sont engagées. De façon plus détaillée, la tubulure extérieure 30 de l'élément 10 comprend, à distance de son extrémité libre, une portée cylindrique interne 62 ayant un diamètre interne très légèrement supérieur au diamètre externe de l'extrémité libre de la tubulure extérieure 48 de l'élément 12. Cette tubulure extérieure 48 de l'élément 12 comprend, à distance de son extrémité libre, un rebord périphérique 64 ayant un diamètre extérieur très légèrement inférieur au diamètre intérieur de l'extrémité libre de la tubulure extérieure 30 de l'élément 10.

De même, la tubulure intérieure 32 de l'élément 10 comprend, à distance de son extrémité libre, une portée cylindrique interne 66 dont le diamètre intérieur est très légèrement supérieur au diamètre extérieur de l'extrémité libre de la tubulure interne 50 de l'élément 12. Cette tubulure intérieure 50 comprend elle-même, à distance de son extrémité libre, une portée cylindrique extérieure 68 dont le diamètre externe est très légèrement inférieur au diamètre interne de l'extrémité libre de la tubulure intérieure 32 de l'élément 10. Ainsi, quand les deux éléments 10 et 12 sont engagés l'un dans l'autre, l'extrémité libre de la tubulure extérieure 30 de l'élément 10 est centrée et appuyée sur le rebord périphérique 64 de la tubulure extérieure 48 de l'élément 12, tandis que l'extrémité libre de cette tubulure 48 est centrée à l'intérieur de la portée cylindrique 62 de la tubulure extérieure 30 de l'élément 10. De même, l'extrémité libre de la tubulure intérieure 32 de l'élément 10 est centrée et appuyée sur la portée cylindrique 68 de la tubulure intérieure 50 de l'élément 12 et l'extrémité libre de cette tubulure 50 est centrée à l'intérieur de la portée cylindrique 66 de la tubulure 32 de l'élément 10.

Comme on le voit en figure 4, le diamètre interne de la tubulure extérieure 30 de l'élément 10 est supérieur au diamètre externe de la tubulure extérieure 48 de l'élément 12, un espace annulaire étant ainsi ménagé entre les deux tubulures pour recevoir un joint d'étanchéité 70, qui se trouve entre le rebord 64 de la tubulure 48 et la portée cylindrique interne 62 de la tubulure 30.

De même, le diamètre interne de la tubulure intérieure 32 de l'élément 10 est supérieur au diamètre externe de la tubulure intérieure 50 de l'élément 12, ce qui ménage un jeu annulaire entre les deux tubulures pour la réception d'un joint annulaire d'étanchéité 72. Ce joint 72 est situé autour de la tubulure intérieure 50, entre la portée cylindrique 68 de celle-ci et la portée cylindrique 66 de la tubulure 32.

Lorsque les deux éléments 10 et 12 du dispositif de raccord rapide sont engagés l'un dans l'autre comme représenté en figure 4, la séparation des passages de liquide formés dans ce dispositif est tout à fait étanche, le liquide arrivant par exemple par le conduit 54, passant dans la tubulure interne 50 puis dans le conduit 38, revenant par les conduits 34 et 36, passant dans la tubulure externe et sortant par le conduit 52, ou inversement. Non seulement les passages de liquide sont séparés de façon étanche, mais de plus, aucune paroi délimitant ces passages n'est en contact avec le liquide sur ses deux faces, ce qui évite l'hydrolyse de la matière plastique par le liquide et les déformations des parois.

Les deux éléments 10 et 12 du dispositif sont maintenus couplés l'un à l'autre par des moyens de verrouillage à encliquetage, qui ont été représentés partiellement en figure 1 et plus complètement dans les figures 5 et 6. Ces moyens comprennent par exemple deux tétons ou ergots 58 formés en saillie sur la surface externe de la tubulure extérieure 48 de l'élément 12, ces deux tétons ou ergots 58 étant diamétralement opposés et formés en arrière du rebord 64 de la tubulure extérieure 48.

Pour recevoir ces ergots ou tétons 58, l'extrémité libre de la tubulure extérieure 30 de l'élément 10 comprend deux encoches 60 en forme de L dont une branche est parallèle à l'axe commun des tubulures 30 et 32 et dont l'autre branche est perpendiculaire à la première et se termine en ayant une dimension, parallèlement à l'axe, sensiblement égale à la dimension correspondante d'un téton ou ergot 58, tandis que le reste de cette autre branche a une largeur légèrement inférieure. Ainsi, au couplage des éléments 10 et 12, les tétons 58 sont introduits dans les premières branches des encoches 60 puis, par une faible rotation (par exemple de l'ordre de 10 à 15°) de l'élément 12 par rapport à l'élément 10, sont amenés jusqu'à l'extrémité des secondes branches des encoches 60. Au cours de cette rotation, les tétons 58 sont déformés élastiquement, car ils ont une dimension axiale légèrement supérieure à celle de la seconde branche des encoches 60 puis, en arrivant à l'extrémité de ces secondes branches qui a une dimension axiale légèrement supérieure à celle des ergots 58, retrouvent leur état sans contrainte.

Pour éviter un déverrouillage accidentel des deux éléments par déformation élastique du bord libre 74 de la seconde branche des encoches 60, ce bord libre 74 est relié, de moulage, à un élément 76 sensiblement en forme de U qui surplombe la première branche de l'encoche 60 et vient se raccorder à la surface extérieure de la tubulure 30, au-delà de la première branche de l'encoche 60. Pour augmenter la rigidité de l'ensemble, le pied de cet élément 76 peut être relié à une nervure 78 parallèle à l'axe, formée en saillie sur la face externe de la tubulure extérieure 30, comme représenté en figure 5.

On comprend que le dispositif selon l'invention permet un raccord simple, rapide et efficace de la boîte à eau 14 d'un échangeur de chaleur à un circuit de liquide. Il suffit pour cela d'engager les éléments 10 et 12 du dispositif l'un dans l'autre, puis de faire tourner l'élément 12 par rapport à l'élément 10 pour obtenir le verrouillage des deux éléments.

L'élément 12 peut être livré aux constructeurs automobiles déjà relié aux tuyaux flexibles précités. Ces derniers sont montés sur les conduits 52 et 54 de l'élément 12 de façon classique, c'est-à-dire en étant enfilés à force sur ces conduits et maintenus en place par des colliers de serrage ou par tout autre moyen analogue. Sur les chaînes de montage des véhicules, il suffit alors d'engager les deux éléments 10 et 12 du dispositif l'un dans l'autre et de les verrouiller par encliquetage.

## Revendications

1. Echangeur de chaleur, en particulier pour véhicule automobile, comprenant un dispositif de raccord ayant un premier élément (10) et un second élément (12), le premier élément présentant deux passages de fluide séparés formés par deux tubulures d'entrée et de sortie de fluide (30, 32) et étant réalisé d'une seule pièce avec une boîte à fluide, et le second élément étant destiné à être relié à un circuit de fluide, caractérisé en ce que ces deux tubulures (30, 32) sont coaxiales sur au moins une partie de leur longueur depuis leur extrémité libre.

2. Echangeur de chaleur selon la revendication 1, caractérisé en ce que, à leur jonction avec la boîte à fluide (14), les tubulures sont parallèles et extérieures l'une à l'autre.

3. Echangeur de chaleur selon l'une des revendications 1 et 2, caractérisé en ce que celle (30) des deux tubulures qui est extérieure à l'autre, dans leurs parties d'extrémités libres, se partage en deux conduits (34, 36) par lesquels elle est reliée à la boîte à fluide (14).

4. Echangeur de chaleur selon la revendication 3, caractérisé en ce que les deux conduits (34, 36) sont parallèles et extérieurs l'un à l'autre et à l'autre tubulure (32, 38).

5. Echangeur de chaleur selon la revendication 3 ou 4, caractérisé en ce que les parties coaxiales (30, 32) des deux tubulures sont formées par deux parois cylidriques coaxiales, qui sont reliées l'une à l'autre à distance de leur extrémité libre par une paroi transversale (46) entourant la tubulure intérieure (32) et de laquelle partent les deux conduits (34, 36) reliant la boîte à fluide (14) à la tubulure extérieure (30).

6. Echangeur de chaleur selon l'une des revendications précédentes, caractérisé en ce que le second élément (12) du dispositif de raccord est formé avec deux passages de fluide séparés l'un de l'autre et propres à être raccordés à étanchéité aux extrémités libres des tubulures coaxiales (30, 32) de la boîte à fluide (14), les deux passages de fluide du second élément (12) étant constitués par deux tubulures coaxiales (48, 50) à l'extrémité de raccordement de cet élément, et par deux conduits (52, 54) extérieurs l'un à l'autre à l'extrémité opposée de cet élément, ces deux conduits étant propres à être reliés chacun à un tuyau flexible d'amenée ou de retour de fluide respectivement.

7. Echangeur de chaleur selon la revendication 6, caractérisé en ce que les deux tubulures coaxiales (48, 50) du second élément (12) sont formées par deux parois cylindriques coaxiales qui sont reliées entre elles, à distance de leur extrémité libre, par une paroi annulaire (56) entourant la tubulure intérieure (50), l'un des conduits extérieurs précités débouchant dans la tubulure extérieure (48) au niveau de cette paroi annulaire (56), tandis que l'autre conduit extérieur (54) est formé par le prolongement de la tubulure intérieure (50).

8. Echangeur de chaleur selon la revendication 6 ou 7, caractérisé en ce que les tubulures coaxiales (30, 32) du premier élément (10) et celles (48, 50) du second élément (12) sont propres à être engagées à étanchéité les unes dans les autres à leurs extrémités.

9. Echangeur de chaleur selon la revendication 8, caractérisé en ce que celle des deux tubulures intérieures (32, 50) (ou extérieures respectivement) des premier et second éléments (10, 12) qui est engagée dans l'autre tubulure intérieure (ou extérieure respectivement) desdits éléments est reçue à son extrémité libre dans une portée cylindrique (66) (ou (62) respectivement) de cette autre tubulure et comprend, à distance de son extrémité libre, une portée cylindrique externe (68) (ou (64) respectivement) de centrage de l'extrémité libre de cette autre tubulure.

10. Echangeur de chaleur selon la revendication 9, caractérisé en ce que les parties de tubulures intérieures (ou extérieures respectivement) qui sont engagées l'une dans l'autre ménagent entre leurs parois cylindriques respectives un espace annulaire de logement d'un joint d'étanchéité (72, 70) respectivement.

11. Echangeur de chaleur selon l'une des revendications 6 à 10, caractérisé en ce que le second élément (12) comprend des moyens (58) de verrouillage à encliquetage propres à coopérer avec des moyens conjugués (60) prévus sur l'une des tubulures coaxiales (30, 32) de la boîte à fluide, lorsque cet élément (12) est raccordé à ces tubulures.

12. Echangeur de chaleur selon la revendication 11, caractérisé en ce que les moyens de verrouillage comprennent un ergot ou téton (58) formé en saillie sur la tubulure extérieure (48) du second élément (12) et propre à être engagé dans une encoche (60) en L de l'extrémité libre de la tubulure extérieure (30) du premier élément (10).

13. Echangeur de chaleur selon l'une des revendications 6 à 12, caractérisé en ce que le second élément (12) est réalisé d'une seule pièce par moulage.

14. Boîte à fluide destinée à être associée à un faisceau de tubes pour constituer un échangeur de chaleur selon l'une des revendications précédentes, cette boîte à fluide comprenant un dispositif de raccord ayant un premier élément (10) et un second élément (12), le premier élément présentant deux passages de fluide séparés formés par deux tubulures d'entrée et de sortie de fluide (30, 32) et étant réalisé d'une seule pièce avec le corps de la boîte à fluide, et le second élément étant destiné à être relié à un circuit de fluide.

**Patentansprüche**

1. Wärmetauscher, insbesondere für Kraftfahrzeuge, bestehend aus einer Verbindung mit einem ersten Element (10) und einem zweiten Element (12), wobei das erste Element zwei separate Flüssigkeitsdurchtritte aufweist, die aus zwei Stutzen für den Eintritt und den Austritt der Flüssigkeit (30, 32) bestehen, und ein einziges Stück mit einer Flüssigkeitskammer bildet, während das zweite Element für den Anschluss an einen Flüssigkeitskreislauf bestimmt ist, dadurch gekennzeichnet, dass diese beiden Stutzen (30, 32) wenigstens über einen Teil ihrer Länge vom freien Ende an koaxial verlaufen.

2. Wärmetauscher gemäss Anspruch 1, dadurch gekennzeichnet, dass die Stutzen an der Verbindungsstelle mit der Flüssigkeitskammer (14) parallel verlaufen und einer ausserhalb des anderen angeordnet ist.

3. Wärmetauscher gemäss einem der Ansprüche 1 und 2, dadurch gekennzeichnet, dass derjenige (30) der beiden Stutzen, der ausserhalb des anderen liegt, sich an den freien Enden in zwei Leitungen (34, 36) teilt, durch die er mit der Flüssigkeitskammer (14) verbunden ist.

4. Wärmetauscher gemäss Anspruch 3, dadurch gekennzeichnet, dass die beiden Leitungen (34, 36) zueinander und im Verhältnis zu dem anderen Stutzen (32, 38) parallel und ausserhalb verlaufen.

5. Wärmetauscher gemäss Anspruch 3 oder 4, dadurch gekennzeichnet, dass die koaxialen Teile (30, 32) der beiden Stutzen aus zwei koaxial verlaufenden zylindrischen Wandungen bestehen, die in einem Abstand vom freien Ende miteinander durch eine Querwand (46) verdunden sind, die den inneren Stutzen (32) umgibt und von der die beiden Leitungen (34, 36) zur Verbindung der Flüssigkeitskammer (14) mit dem äusseren Stutzen (30) ausgehen.

6. Wärmetauscher gemäss einem der vorangegangenen Ansprüche, dadurch gekennzeichnet, dass das zweite Element (12) der Verbindung mit zwei voneinander getrennten Flüssigkeitsdurchtritten ausgebildet ist, die dicht an die beiden freien Enden der koaxial verlaufenden Stutzen (30, 32) der Flüssigkeitskammer (4) angeschlossen werden können, wobei die beiden Flüssigkeitsdurchtritte des zweiten Elements (12) aus zwei koaxial verlaufenden Stutzen (48, 50) am Anschlussende dieses Elements und aus zwei Leitungen (52, 54) am gegenüberliegenden Ende dieses Elements, von denen eine auserhalb der anderen Leitungen sich jeweils zum Anschluss an einen Flüssigkeits-Zuleitungs- und Rücklaufschlauch eignen.

7. Wärmetauscher gemäss Anspruch 6, dadurch gekennzeichnet, dass die beiden koaxial verlaufenden Stutzen (48, 50) des zweiten Elements (12) aus zwei koaxial verlaufenden zylinderförmigen Wänden bestehen, die in einem Abstand vom freien Ende miteinander durch eine Ringwandung (56) verbunden sind, die den inneren Stutzen (50) umgibt, wobei eine der vorgenannten äusseren Leitungen in Höhe dieser Ringwandung (56) in den äusseren Stutzen (48) einmündet, während die andere äussere Leitung (54) aus einer Verlängerung des inneren Stutzens (50) besteht.

8. Wärmetauscher gemäss Anspruch 6 oder 7, dadurch gekennzeichnet, dass die koaxial verlaufenden Stutzen (30, 32) des ersten Elements (10) und diejenigen (48, 50) des zweiten Elements (12) dazu geeignet sind, an den Enden dicht ineinander einzurasten.

9. Wärmetauscher gemäss Anspruch 8, dadurch gekennzeichnet, dass derjenige der beiden inneren Stutzen (32, 50) (bzw. äusseren Stutzen) des ersten und zweiten Elements (10, 12), der in den anderen inneren Stutzen (bzw. äusseren Stutzen) der erwähnten Elemente eingreift, am freien Ende von einer zylindrischen Fläche (66) (bzw. (62)) dieses anderen Stutzens aufgenommen wird und in einem Abstand vom freien Ende eine zylinderförmige äussere Fläche (68) (bzw. (64)) zur Zentrierung des freien Endes dieses anderen Stutzens aufweist.

10. Wärmetauscher gemäss Anspruch 9, dadurch gekennzeichnet, dass die Teile der inneren Stutzen (bzw. der äusseren Stutzen), die ineinander einrasten, zwischen ihren zylinderförmigen Wänden jeweils einen ringförmigen Raum zum Einsetzen eines entsprechenden Dichtungsringes (72, 70) aufweisen.

11. Wärmetauscher gemäss einem der Ansprüche 6 bis 10, dadurch gekennzeichnet, dass das zweite Element (12) Verklinkungsvorrichtungen (58) enthält, die geeignet sind, mit den an einer der koaxialen Stutzen (30, 32) der Flüssigkeitskammer vorgesehenen Anbauvorrichtungen (60) zusammenzuwirken, wenn dieses Element (12) an diese Stutzen angeschlossen ist.

12. Wärmetauscher gemäss Anspruch 11, dadurch gekennzeichnet, dass die Verklinkungsvorrichtungen einen Nocken oder Zapfen (58) enthalten, der als Vorsprung am äusseren Stutzen (48) des zweiten Elements (12) ausgebildet ist und in eine L-förmige Aussparung (60) am freien Ende des äusseren Stutzens (30) des ersten Elements (10) einrasten kann.

13. Wärmetauscher gemäss einem der Ansprüche 6 bis 12, dadurch gekennzeichnet, dass das zweite Element (12) aus einem einzigen Stück gegossen ist.

14. Flüssigkeitskammer zum Einsatz in Verbindung mit einem Rohrbündel zweick Bildung eines Wärmetauschers gemäss einem der vorangegangenen Ansprüche, wobei diese Flüssigkeitskammer eine Verbindung mit einem ersten Element (10) und einem zweiten Element (12) enthält, wobei das erste Element zwei separate Flüssigkeitsdurchtritte aufweist, die aus zwei Stutzen für den Eintritt und den Austritt von Flüssigkeit (30, 32) bestehen, und mit dem Körper der Flüssigkeitskammer ein einziges Teil bildet, während das zweite Element für den Anschluss an einen Flüssigkeitskreislauf bestimmt ist.

**Claims**

1. A heat exchanger, in particular for a motor vehicle, comprising a connecting device having a first element (10) and a second element (12), the first element having two separate fluid passageways formed by two fluid inlet and outlet tubes (30, 32) and being made integrally with a fluid box, and the second element being intended to be connected to a fluid circuit, characterised in that these two tubes (30, 32) are coaxial over at least one portion of their length starting from their free end.

2. A heat exchanger according to claim 1, characterised in that at their junction with the fluid box (14), the tubes are parallel and outside one another.

3. A heat exchanger according to one of claims 1 or 2, characterised in that the one (30) of the two tubes which is outside the other in their free end portions is split into two ducts (34, 36) through which it is connected to the fluid box (14).

4. A heat exchanger according to claim 3, characterised in that the two ducts (34, 36) are parallel and outside one another and outside the other tube (32, 38).

5. A heat exchanger according to claim 3 or 4, characterised in that the coaxial portions (30, 32) of the two tubes are formed by two coaxial cylindrical walls which are connected to each other at a distance from their free end by a transverse wall (46) surrounding the inner tube (32) and from which there extend the two ducts (34, 36) connecting the fluid box (14) to the outer tube (30).

6. A heat exchanger according to one of the preceding claims, characterised in that the second element (12) of the connecting device is formed with two fluid passageways which are separated from each other and capable of being connected in a leakproof manner to the free ends of the coaxial tubes (30, 32) of the fluid box (14), the two fluid passageways of the second element (12) being constituted by two coaxial tubes (48, 50) at the connecting end of this element, and by two ducts (52, 54) which are outside one another, at the opposite end of this element, these two ducts being capable of being each connected to a flexible hose for fluid feed or return respectively.

7. A heat exchanger according to claim 6, characterised in that the two coaxial tubes (48, 50) of the second element (12) are formed by two coaxial cylindrical walls which are interconnected at a distance from their free end, by an annular wall (56) surrouding the inner tube (50), one of the aforesaid outer ducts opening out into the outer tube (48) at the level of this annular wall (56), while the other outer duct (54) is formed by an extension of the inner tube (50).

8. A heat exchanger according to claim 6 or 7, characterised in that the coaxial tubes (30, 32) of the first element (10) and those (48, 50) of the second element (12) are capable of being engaged in one another at their ends in a leakproof manner.

9. A heat exchanger according to claim 8, characterised in that one of the two inner tubes (32, 50) (or outer tubes respectively) of the first and second elements (10, 12) which is engaged in the other inner tube (or outer tube respectively) of the said elements is received at its free end in a cylindrical bearing surface (66) (or (62) respectively) of this other tube and comprises, at a distance from its free end, an outer cylindrical bearing surface (68) (or (64) respectively) for centering the free end of this other tube.

10. A heat exchanger according to claim 9, characterised in that the portions of the inner (or respectively outer) tubes which are engaged in each other provide an annular space between their respective cylindrical walls for receiving a sealing joint (72, 70) respectively.

11. A heat exchanger according to one of claims 6 to 10, characterised in that the second element (12) comprises snap fastening locking means (58) capable of cooperating with conjugate means (60) provided on one of the coaxial tubes (30, 32) of the fluid box, when this element (12) is connected to these tubes.

12. A heat exchanger according to claim 11, characterised in that the locking means comprise a stud or peg (58) formed to project on the outer tube (48) of the second element (12) and capable of being engaged in an L-shaped notch (60) of the free end of the outer tube (30) of the first element (10).

13. A heat exchanger according to one of claims 6 to 12, characterised in that said element (12) is integrally made by moulding.

14. A fluid box intended to be joined to a tube bank to constitute a heat exchanger according to any one of the preceding claims, this fluid box comprising a connecting device having a first element (10) and a second element (12), the first element having two separate passageways formed by two fluid inlet and outlet tubes (30, 32), and being made integrally with the body of the fluid box, and the second element being intended to be connected to a fluid circuit.

FIG.1

EP 0 255 517 B1

FIG. 2

FIG. 3

# FIG. 4

# FIG. 6

# FIG. 5